# EUROPEAN PATENT APPLICATION

(11) **EP 3 939 720 A1**
(43) Date of publication of application: **19.01.2022**
(21) Application number: 20769585.9
(22) Date of filing: 09.03.2020
(51) Int. Cl.: B22F 3/105, B22F 3/16

(54) **METHOD FOR MANUFACTURING SHAPED ARTICLE, AND INTERMEDIATE AND SHAPED ARTICLE**

(30) Priority: 12.03.2019 JP 2019044899
(71) Applicant: Kawasaki Jukogyo Kabushiki Kaisha, Hyogo 650-8670 (JP)
(72) Inventor: OKADA, Ryutaro, Hyogo, 650-8670 (JP); NOMURA, Yoshimichi, Hyogo, 650-8670 (JP); IGASHIRA, Kenichiro, Hyogo, 650-8670 (JP)
(74) Representative: Dehns
(86) International application number: PCT/JP2020/010065
(87) International publication number: WO 2020/184519

(57) **Abstract**

A shaped article production method includes: fabricating an intermediate article by powder bed fusion using a powder of a gamma prime precipitation strengthening-type Ni-based alloy; and heat-treating the intermediate article. The Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C. The fabricating the intermediate article includes applying a laser beam to a layer (3) of the powder along scan lines (4) parallel to one another, and in applying the laser beam, a value obtained by dividing a pitch between the scan lines (4) by a laser spot diameter is in the range of 0.6 to 1.0.

## Description

### Technical Field

The present invention relates to a method of producing a shaped article and further relates to an intermediate article obtained at an intermediate stage in the method and a shaped article obtained at a final stage in the method.

### Background Art

A method of fabricating an intermediate article by powder bed fusion using a powder of a Ni-based alloy and producing a shaped article by heat treatment of the intermediate article is conventionally known (see Patent Literature 1, for example). The shaped article produced by this production method and made of the Ni-based alloy is used as a high-temperature part such as that of a gas turbine engine.

In some cases, a gamma prime precipitation strengthening-type Ni-based alloy is used as the Ni-based alloy constituting the powder. The gamma prime precipitation strengthening-type Ni-based alloy is a Ni-based alloy having a composition prepared such that heat treatment of the alloy leads to precipitation of a gamma prime (Ni₃(Al,Ti)) phase for strength enhancement.

### Citation List

### Patent Literature

PTL 1: Japanese Laid-Open Patent Application Publication No. 2013-96013

### Summary of Invention

### Technical Problem

In the case of using a powder of a gamma prime precipitation strengthening-type Ni-based alloy as described above, a shaped article with excellent creep properties is difficult to produce by common powder bed fusion.

It is therefore an object of the present invention to provide: a shaped article production method capable of producing a shaped article with excellent creep properties; and a shaped article obtained by the shaped article production method.

### Solution to Problem

As a result of intensive studies with the goal of solving the above problem, the present inventors have found that in powder bed fusion where a laser beam is applied to a layer of a powder along scan lines parallel to one another, a value obtained by dividing the pitch between the scan lines by the laser spot diameter is correlated with the creep properties of the shaped article. The present invention has been made based on this finding.

That is, a shaped article production method of the present invention includes: fabricating an intermediate article by powder bed fusion using a powder of a gamma prime precipitation strengthening-type Ni-based alloy; and heat-treating the intermediate article, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, the fabricating the intermediate article includes applying a laser beam to a layer of the powder along scan lines parallel to one another, and in applying the laser beam, a value obtained by dividing a pitch between the scan lines by a laser spot diameter is in the range of 0.6 to 1.0.

With the above features, a shaped article with excellent creep properties can be produced.

The heat-treating the intermediate article may include HIP (hot isostatic pressing) treatment. In particular, in the case where the HIP treatment is performed as the heat treatment, the creep properties of the shaped article can be significantly improved.

An intermediate article of the present invention is an intermediate article made of a Ni-based alloy, the intermediate article including columnar crystal grains of a dendritic crystal structure, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, a spacing between branches of a primary dendritic crystal of the dendritic crystal structure is less than 3 µm, and a degree of orientation in {100} plane in a cut surface perpendicular to a longitudinal direction of the columnar crystal grains is 40% or more. The {100} plane is one defined by Miller indices describing crystal planes and orientations in crystal lattices.

An intermediate article fabricated by powder bed fusion includes columnar crystal grains of a dendritic crystal structure. In a shaped article produced by casting, the spacing between the branches of the primary dendritic crystal of the dendritic crystal structure is as large as more than about 40 µm. In contrast, in an intermediate article fabricated by powder bed fusion using a laser beam as a heat source, the spacing between the branches of the primary dendritic crystal of the dendritic crystal structure is as small as less than 3 µm. Additionally, when, in the powder bed fusion, the value obtained by dividing the pitch between the scan lines by the laser spot diameter is in the range of 0.6 to 1.0 as described above, the degree of orientation in {100} plane in a specified cut surface (cut surface perpendicular to the longitudinal direction of the columnar crystal grains) is 40% or more.

A shaped article according to one aspect of the present invention is a shaped article made of a Ni-based alloy, the shaped article including columnar crystal grains of a non-dendritic crystal structure, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and when shapes of the columnar crystal grains observed in a cut surface parallel to a longitudinal direction of the columnar crystal grains are approximated by ellipses each of which has an area equal to that of a corresponding one of the columnar crystal grains, an aspect ratio calculated as a ratio of an average of lengths of major axes of the ellipses to an average of lengths of minor axes of the ellipses is 4.0 or more.

A shaped article according to another aspect of the present invention is a shaped article made of a Ni-based alloy, the shaped article including columnar crystal grains of a non-dendritic crystal structure, wherein the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and a degree of orientation in {100} plane in a cut surface perpendicular to a longitudinal direction of the columnar crystal grains is 40% or more.

Heat treatment of the intermediate article as defined above leads to the loss of the dendritic crystal structure. Depending on the heat treatment, the aspect ratio of the columnar crystal grains in a cut surface perpendicular to the specified cut surface may be 4.0 or more, or the degree of orientation in the specified cut surface may remain 40% or more. That is, the shaped article having the above features is a shaped article with excellent creep properties. In particular, in the case where the heat treatment includes the HIP treatment, the aspect ratio of the columnar crystal grains is 4.0 or more, and the shaped article having this feature is a shaped article with significantly improved creep properties.

### Advantageous Effects of Invention

The present invention makes it possible to produce a shaped article with excellent creep properties.

### Brief Description of Drawings

FIG. 1 illustrates a fabrication step of fabricating an intermediate article by powder bed fusion.
FIG. 2 is a diagram for explaining a degree of orientation in {100} plane in a specified cut surface.
FIG. 3 shows an example of a heat treatment step.
FIG. 4 is a side view of a test specimen used in a creep rupture test.
FIG. 5 is a graph showing the relationship between the degree of orientation of the intermediate article and the time to rupture in the creep rupture test for Examples 1A to 3A and Comparative Examples 1A to 4A.
FIG. 6 is a graph showing the relationship between the degree of orientation of the intermediate article and the time to rupture in the creep rupture test for Examples 1B to 3B and Comparative Examples 1B to 4B.
FIG. 7 is a graph showing the relationship between the aspect ratio of the columnar crystal grains in the shaped article and the time to rupture in the creep rupture test for Examples 1B and 2B and Comparative Examples 1B to 4B.

### Description of Embodiments

A shaped article production method according to one embodiment of the present invention includes a fabrication step of fabricating an intermediate article by powder bed fusion and a heat treatment step of heat-treating the fabricated intermediate article. Hereinafter, each step will be described in detail.

### <Fabrication step>

In the powder bed fusion, a powder of a gamma prime precipitation strengthening-type Ni-based alloy is used. In the present embodiment, the heat source used in the powder bed fusion to melt the powder is a laser beam, although the heat source may be an electron beam in some cases.

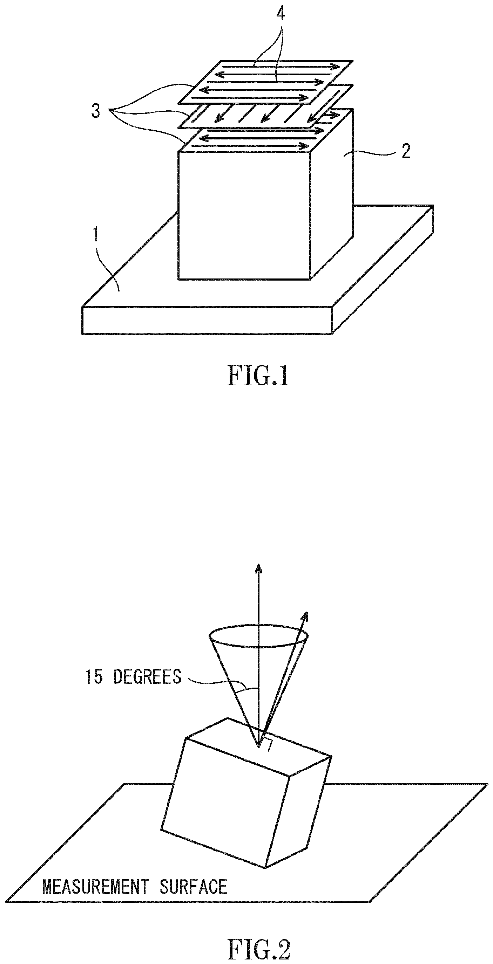

In the powder bed fusion, as shown in FIG. 1, a layer 3 of the powder is formed on a platform 1, and a laser beam is applied to the layer 3 along scan lines 4 parallel to one another. The laser beam applied is focused in the vicinity of the surface of the layer 3. The location, shape, and length of each scan line 4 are determined depending on the cross-sectional shape of the intermediate article to be fabricated (the intermediate article has the same shape as the shaped article to be finally produced). For example, the scan lines 4 may be straight or curved.

FIG. 1 illustrates an example of fabrication of a quadrangular prism-shaped intermediate article. In FIG. 1, the laser scan direction is opposite between the adjacent scan lines 4. However, the laser scan direction may be the same for all the scan lines 4.

The application of a laser beam to the layer 3 results in melting and solidification of a part or the whole of the layer 3. After that, the platform 1 is lowered by a distance corresponding to the thickness of the layer 3, and a new layer (hereinafter referred to as "top layer") 3 of the powder is formed on the previously formed layer (hereinafter referred to as "previous layer") 3. A laser beam is then applied to the top layer 3 along the parallel scan lines 4. The configuration made up of the previous layer 3 and the top layer 3 formed on the previous layer 3 is a bed 2, which includes the already-shaped portion and the unmelted powder.

The directions of the scan lines 4 may be the same or different between the top layer 3 and previous layer 3. In the case where the directions of the scan lines 4 are different between the top layer 3 and previous layer 3, the angle of the scan lines 4 of the top layer 3 with respect to the scan lines 4 of the previous layer 3 (the angle will be referred to as "scan rotation angle" hereinafter) can be determined as appropriate. For example, in FIG. 1, the scan rotation angle is 90 degrees.

The above process is repeated, and finally the unmelted powder is removed from the bed 2. In this manner, the intermediate article is fabricated. Such an intermediate article includes columnar crystal grains of a dendritic crystal structure. In the dendritic crystal structure, the spacing between the branches of the primary dendritic crystal is as small as less than 3 µm. The longitudinal direction of the columnar crystal grains of the intermediate article is the layer stacking direction in the fabrication of the intermediate article (the upward/downward direction in FIG. 1).

The particle size distribution of the powder used in the powder bed fusion ranges, for example, from 10 to 60 µm and desirably ranges from 10 to 45 µm. The thickness of the layers 3 is, for example, equal to or greater than the median value of the particle size distribution of the powder and equal to or smaller than three times the median value of the particle size distribution of the powder.

The Ni-based alloy constituting the powder contains, in percent by mass (the same applies hereinafter), 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C as essential components other than Ni. The Ni-based alloy may contain 0.001 to 0.03% B as an essential component. Examples of such a Ni-based alloy include IN 713C ("IN" is an abbreviation of Inconel^{™}; the same applies hereinafter) and IN 713LC. As for Nb and Ta, the Ni-based alloy may be devoid of either Nb or Ta.

The more desired contents of the essential components are as follows: 11 to 14% Cr, 5.5 to 6.5% Al, 3.8 to 5.2% Mo, 1.65 to 2.65% Nb + Ta, 0.5 to 1.0% Ti, 0.05 to 0.15% Zr, and 0.02 to 0.2% C.

The Ni-based alloy may contain at least one of less than 1% Co, less than 0.5% Cu, less than 0.5% Fe, and less than 0.5% Si as an optional component. The rest of the Ni-based alloy, namely the portion other than the components mentioned above, is constituted by Ni and inevitable impurities.

In the present embodiment, in applying a laser beam to each layer 3, a value (L/D) obtained by dividing a pitch L between the scan lines 4 by a laser spot diameter D is in the range of 0.6 to 1.0. The laser spot diameter D refers to a beam diameter at a point at which the intensity of the laser beam falls down to 1/e² of the peak value (i.e., the intensity of the laser beam is about 13.5% of the peak value). Some powder bed fusion devices employing lasers permit the user to set the laser spot diameter, and others do not.

The laser spot diameter D is, for example, from 0.02 to 0.20 mm and desirably from 0.05 to 0.15 mm. The pitch L between the scan lines 4 is, for example, from 0.05 to 0.08 mm. Desirably, the L/D is in the range of 0.6 to 0.9.

The laser scan speed is, for example, from 500 to 3000 mm/s, desirably from 600 to 2000 mm/s, and more desirably from 700 to 1500 mm/s. The laser output is, for example, from 100 to 400 W, desirably from 130 to 350 W, and more desirably from 150 to 300 W.

By virtue of the fact that in applying a laser beam to each layer 3, the value (L/D) obtained by dividing the pitch L between the scan lines 4 by the laser spot diameter D is in the range of 0.6 to 1.0 as described above, a degree of orientation in {100} plane in a cut surface perpendicular to the longitudinal direction of the columnar crystal grains (this cut surface will be referred to as "specified cut surface" hereinafter) is 40% or more (and can be 50% or more depending on the conditions).

The "degree of orientation in {100} plane" refers to the proportion of the area occupied by particular crystal grains in a measurement surface, the particular crystal grains being crystal grains for which the angle between the direction of the normal to the measurement surface (the upward direction in FIG. 2) and the direction of the normal to the {100} plane is not more than 15 degrees as shown in FIG. 2. The proportion of the area is calculated through EBSD (electron backscatter diffraction). For reference, a cast article generally exhibits a long creep rupture lifetime when exposed to a creep load acting in a direction perpendicular to the {100} plane.

### <Heat treatment step>

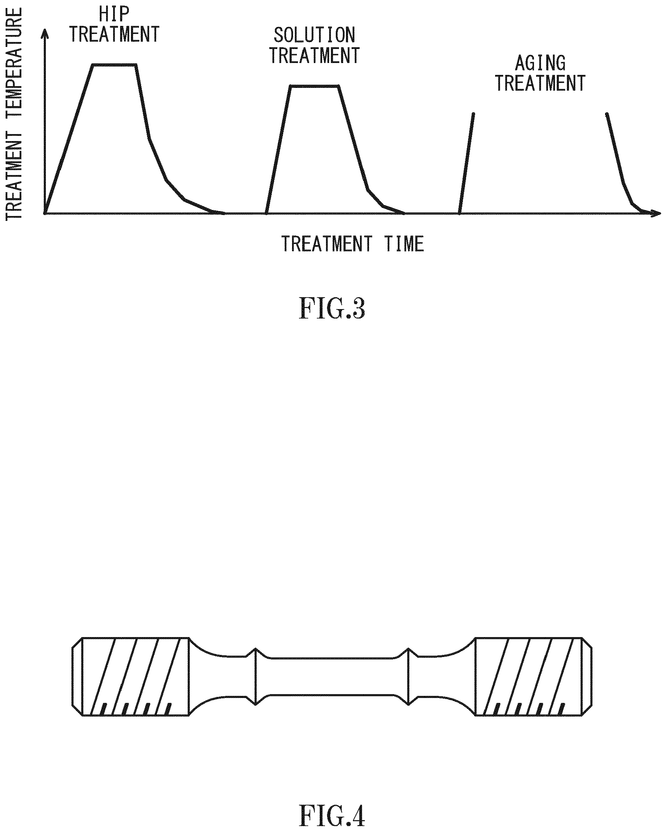

The heat treatment performed in the heat treatment step includes, for example, HIP treatment, solution treatment, and aging treatment as shown in FIG. 3. The HIP treatment may be omitted, or both the HIP treatment and solution treatment may be omitted.

In the HIP treatment, the intermediate article is placed into a furnace charged with an inert gas, and the interior of the furnace is heated and pressurized for a predetermined time. An example of the inert gas is argon. The heating/pressurization time is, for example, from 0.5 to 6 hours and desirably from 1 to 3 hours. The heating temperature is, for example, from 1150 to 1270°C. The pressure in the pressurization is, for example, from 80 to 150 MPa and desirably from 90 to 120 MPa.

In the solution treatment, the intermediate article is heated in the air, in a vacuum, or in an inert gas atmosphere for a predetermined time and is then cooled. The cooling technique may be any of air cooling (including gas fan cooling), water cooling, and oil cooling. The heating time is, for example, from 0.5 to 6 hours and desirably from 1 to 3 hours. The heating temperature is, for example, from 1150 to 1270°C.

In the aging treatment, the intermediate article is heated in the air, in a vacuum, or in an inert gas atmosphere for a relatively long predetermined time and is then cooled. The cooling technique may be any of air cooling (including gas fan cooling), water cooling, oil cooling, and furnace cooling. The heating time is, for example, from 2 to 24 hours and desirably from 10 to 20 hours. The heating temperature is, for example, from 700 to 1000°C. If necessary, the aging treatment may be performed a plurality of times under different conditions.

The shaped article is produced through the fabrication and heat treatment steps described above. The shaped article includes columnar crystal grains of a non-dendritic crystal structure since the dendritic crystal structure is lost by the heat treatment.

In the case where the heat treatment in the heat treatment step does not include the HIP treatment, the degree of orientation in the specified cut surface remains 40% or more. In the case where the heat treatment includes the HIP treatment, the aspect ratio of the columnar crystal grains is 4.0 or more. The aspect ratio is defined as follows: when the shapes of the columnar crystal grains observed in a cut surface parallel to the longitudinal direction of the columnar crystal grains (a cut surface perpendicular to the specified cut surface) are approximated by ellipses each of which has an area equal to that of a corresponding one of the columnar crystal grains, the aspect ratio is calculated as the ratio of the average of the lengths of the major axes of the ellipses to the average of the lengths of the minor axes of the ellipses. The aspect ratio of the columnar crystal grains may be 6.0 or less or may be 5.0 or less.

The shaped article obtained by the production method of the present embodiment is a shaped article with excellent creep properties. In particular, in the case where the heat treatment includes the HIP treatment, the aspect ratio of the columnar crystal grains is 4.0 or more, and the shaped article having this feature is a shaped article with significantly improved creep properties.

### Examples

Hereinafter, the present invention will be described using examples. The present invention is not limited to the examples described below.

### (Examples 1A and 1B)

Powder bed fusion using a powder containing alloy components corresponding to those of IN 713C was carried out to produce an intermediate article in the shape of a rectangular parallelepiped (10 mm × 10 mm × 60 mm) extending longitudinally in the layer stacking direction. The particle size distribution of the powder ranged from 16 to 45 µm. Analysis of the alloy components of the powder revealed that the contents of components other than Ni were as follows: 12.41% Cr, 5.94% Al, 4.36% Mo, 1.94% Nb, 0.009% Ta, 0.68% Ti, 0.11% Zr, 0.06% C, 0.01% B, 0.18% Co, 0.02% Cu, 0.20% Fe, and 0.03% Si (the content of inevitable impurities is omitted).

The powder bed fusion device used was EOS M290 manufactured by EOS. In this device, the laser spot diameter D is set to 0.08 mm by the manufacturer. In the production of the shaped article, the thickness of layers was 40 µm, and a laser beam was applied to the layers with a scan line-to-scan line pitch of 0.05 mm, a laser scan speed of 1000 mm/s, a laser output of 180 W, and a scan rotation angle of 90 degrees.

In Example 1A, the above intermediate article was subjected to solution treatment and aging treatment to obtain a shaped article. In the solution treatment, the intermediate article was heated in an argon atmosphere. The heating time was 2 hours, and the heating temperature was 1176°C. In the aging treatment, the intermediate article was heated in an argon atmosphere. The heating time was 16 hours, and the heating temperature was 925°C.

In Example 1B, the above intermediate article was subjected to HIP treatment, solution treatment, and aging treatment to obtain a shaped article. In the HIP treatment, argon was used as the inert gas. The heating/pressurization time was 2 hours, the heating temperature was 1200°C, and the pressure in the pressurization was 98 MPa. The solution treatment and aging treatment were the same as those in Example 1A.

### (Examples 2A and 2B)

Shaped articles were produced in the same manner as in Examples 1A and 1B, except that the scan line-to-scan line pitch in the laser beam application to the layers was 0.06 mm. That is, the shaped article of Example 2A was produced without the HIP treatment, and the shaped article of Example 2B was produced through the HIP treatment.

### (Examples 3A and 3B)

Shaped articles were produced in the same manner as in Examples 1A and 1B, except that the scan line-to-scan line pitch in the laser beam application to the layers was 0.07 mm. That is, the shaped article of Example 3A was produced without the HIP treatment, and the shaped article of Example 3B was produced through the HIP treatment.

### (Comparative Examples 1A and 1B)

Shaped articles were produced in the same manner as in Examples 1A and 1B, except that the scan line-to-scan line pitch in the laser beam application to the layers was 0.03 mm. That is, the shaped article of Comparative Example 1A was produced without the HIP treatment, and the shaped article of Comparative Example 1B was produced through the HIP treatment.

### (Comparative Examples 2A and 2B)

Shaped articles were produced in the same manner as in Examples 1A and 1B, except that the scan line-to-scan line pitch in the laser beam application to the layers was 0.04 mm. That is, the shaped article of Comparative Example 2A was produced without the HIP treatment, and the shaped article of Comparative Example 2B was produced through the HIP treatment.

### (Comparative Examples 3A and 3B)

Shaped articles were produced in the same manner as in Examples 1A and 1B, except that in the laser beam application to the layers, the scan line-to-scan line pitch was 0.09 mm, the laser scan speed was 1250 mm/s, and the laser output was 270 W. That is, the shaped article of Comparative Example 3A was produced without the HIP treatment, and the shaped article of Comparative Example 3B was produced through the HIP treatment.

### (Comparative Examples 4A and 4B)

Shaped articles were produced in the same manner as in Examples 1A and 1B, except that in the laser beam application to the layers, the scan line-to-scan line pitch was 0.11 mm, the laser scan speed was 960 mm/s, the laser output was 285 W, and the scan rotation angle was 67 degrees. The shaped article of Comparative Example 4A was produced without the HIP treatment, and the shaped article of Comparative Example 4B was produced through the HIP treatment.

The conditions of the production of the shaped articles of Examples 1A to 3A and 1B to 3B and Comparative Examples 1A to 4A and 1B to 4B are shown in Table 1. Table 1 further shows the value (L/D) of the scan line-to-scan line pitch L divided by the laser spot diameter D.

**[Table 1]**

| | Scan line-to-scan line pitch L (mm) | L/D | Laser scan speed (mm/s) | Laser output (W) | Scan rotation angle (degrees) |
|---|---|---|---|---|---|
| Examples 1A and 1B | 0.05 | 0.625 | 1000 | 180 | 90 |
| Examples 2A and 2B | 0.06 | 0.75 | 1000 | 180 | 90 |
| Examples 3A and 3B | 0.07 | 0.875 | 1000 | 180 | 90 |
| Comparative Examples 1A and 1B | 0.03 | 0.375 | 1000 | 180 | 90 |
| Comparative Examples 2A and 2B | 0.04 | 0.5 | 1000 | 180 | 90 |
| Comparative Examples 3A and 3B | 0.09 | 1.125 | 1250 | 270 | 90 |
| Comparative Examples 4A and 4B | 0.11 | 1.375 | 960 | 285 | 67 |

### (Calculation of degree of orientation of intermediate article)

Each of the intermediate articles of Examples 1A to 3A and 1B to 3B and Comparative Examples 1A to 4A and 1B to 4B was cut along a plane perpendicular to the longitudinal direction (layer stacking direction), and the degree of orientation in {100} plane in the cut surface was calculated. For this calculation, SEM-SU 5000 manufactured by Hitachi, Ltd. and Pegasus Digiview 5 manufactured by EDAX/TSL were used as EBSD devices, and OIM Data Collection/OIM Analysis ver. 8 manufactured by EDAX/TSL was used as analysis software.

### (Calculation of aspect ratio of columnar crystal grains in shaped article)

Each of the shaped articles of Examples 1B and 2B and Comparative Examples 1B to 4B was cut along a plane parallel to the longitudinal direction (layer stacking direction). The shapes of the columnar crystal grains observed in the cut surface were approximated by ellipses each of which had an area equal to that of a corresponding one of the columnar crystal grains, and the aspect ratio was calculated as the ratio of the average of the lengths of the major axes of the ellipses to the average of the lengths of the minor axes of the ellipses. This calculation was carried out using EBSD devices and analysis software that were the same as those used in calculation of the degree of orientation. In identification of the grain boundaries, the threshold angle was set to 15 degrees. In calculation of the average of the lengths of the minor axes and the average of the lengths of the major axes, the averages were weighted by the areas of the ellipses by which the shapes of the crystal grains were approximated.

The values of the degree of orientation of the intermediate articles of Examples 1A to 3A and 1B to 3B and Comparative Examples 1A to 4A and 1B to 4B are shown in Table 2, and the values of the aspect ratio of the columnar crystal grains in the shaped articles of Examples 1B and 2B and Comparative Examples 1B to 4B are shown in Table 3.

**[Table 2]**

| | Degree of orientation of intermediate article (%) |
|---|---|
| Examples 1A and 1B | 50.1 |
| Examples 2A and 2B | 65.1 |
| Examples 3A and 3B | 67.5 |
| Comparative Examples 1A and 1B | 5.6 |
| Comparative Examples 2A and 2B | 7.1 |
| Comparative Examples 3A and 3B | 32.3 |
| Comparative Examples 4A and 4B | 33.3 |

**[Table 3]**

| | Aspect ratio of columnar crystal grains in shaped article |
|---|---|
| Example 1B | 4.20 |
| Example 2B | 4.36 |
| Example 3B | - |
| Comparative Example 1B | 3.95 |
| Comparative Example 2B | 3.58 |
| Comparative Example 3B | 3.49 |
| Comparative Example 4B | 3.21 |

As is evident from Table 3, in the shaped articles of Examples 1B and 2B where the scan line-to-scan line pitch in the laser beam application to the layers was adjusted to allow the L/D to fall within the range of 0.6 to 0.9 (namely, the range of 0.6 to 1.0), the aspect ratio of the columnar crystal grains was 4.0 or more. In contrast, in the shaped articles of Comparative Examples 1B to 4B where the L/D was less than 0.6 or more than 1.0, the aspect ratio of the columnar crystal grains was less than 4.0.

The above difference in aspect ratio is presumably due to the degree of orientation of the intermediate articles. Specifically, in the intermediate articles of Examples 1A to 3A and 1B to 3B, the degree of orientation was 50% or more (namely, 40% or more), while in the shaped articles of Comparative Examples 1A to 4A and 1B to 4B, the degree of orientation was less than 40%.

The shaped articles of Examples 1Ato 3A where the HIP treatment was not performed as the heat treatment were examined for the degree of orientation. The values of the degree of orientation of the shaped articles were substantially equal to those of the corresponding intermediate articles. The shaped articles of Examples 1B to 3B where the HIP treatment was performed as the heat treatment were utterly different from the shaped articles of Examples 1A to 3A and had a completely random crystal structure.

### (Creep rupture test)

A rod-shaped test specimen as shown in FIG. 4 was cut out from each of the shaped articles of Examples 1A to 3A and 1B to 3B and Comparative Examples 1A to 4A and 1B to 4B. This test specimen was pulled in the longitudinal direction, and the time to rupture of the test specimen was measured. The temperature of the test specimen was 980°C, and the tensile stress was 90 MPa.

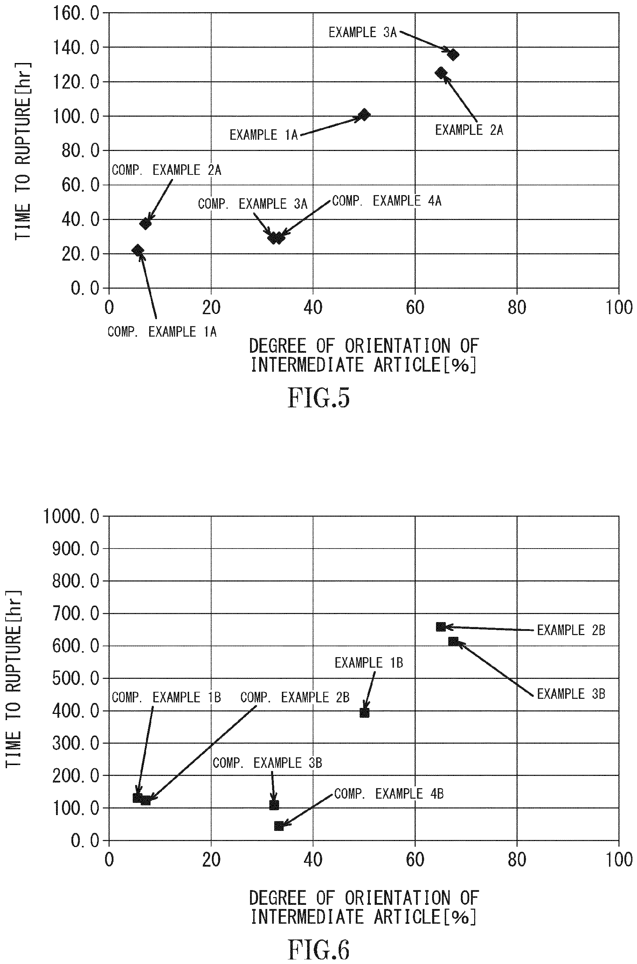

Table 4 shows the results of the creep rupture test. FIG. 5 shows the relationship between the degree of orientation of the intermediate article and the time to rupture in the creep rupture test for Examples 1Ato 3A and Comparative Examples 1Ato 4A, and FIG. 6 shows the relationship between the degree of orientation of the intermediate article and the time to rupture in the creep rupture test for Examples 1B to 3B and Comparative Examples 1B to 4B.

**[Table 4]**

| | Time to rupture (hr) | | Time to rupture (hr) |
|---|---|---|---|
| Example 1A | 100.8 | Example 1B | 393.2 |
| Example 2A | 125.2 | Example 2B | 657.9 |
| Example 3A | 135.6 | Example 3B | 612.1 |
| Comparative Example 1A | 21.9 | Comparative Example 1B | 130.0 |
| Comparative Example 2A | 37.4 | Comparative Example 2B | 123.3 |
| Comparative Example 3A | 29.0 | Comparative Example 3B | 108.6 |
| Comparative Example 4A | 28.9 | Comparative Example 4B | 44.7 |

As is evident from Table 4 and FIGS. 5 and 6, the time to rupture was from 100 to 140 hours in Examples 1A to 3A where the HIP treatment was not performed. In contrast, in Examples 1B to 3B where the HIP treatment was performed, the time to rupture was from 390 to 660 hours. This demonstrates that the creep properties were significantly improved by the HIP treatment.

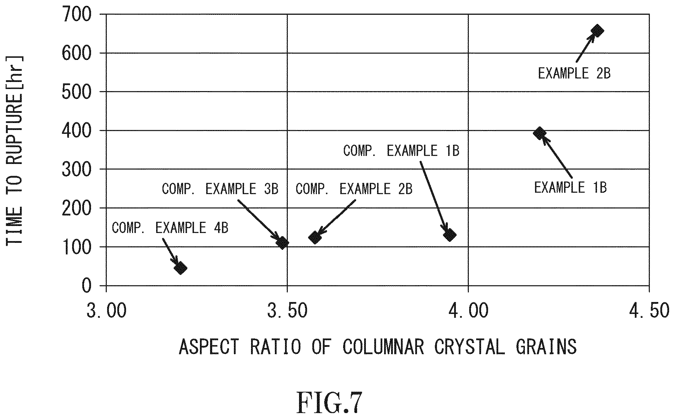

FIG. 7 shows the relationship between the aspect ratio of the columnar crystal grains in the shaped article and the time to rupture in the creep rupture test for Examples 1B and 2B and Comparative Examples 1B to 4B. FIG. 7 reveals that the greater the aspect ratio of the columnar crystal grains was, the longer the time to rupture was.

### Reference Signs List

- 1: platform
- 2: bed
- 3: layer
- 4: scan line

## Claims

1. A shaped article production method comprising:
fabricating an intermediate article by powder bed fusion using a powder of a gamma prime precipitation strengthening-type Ni-based alloy; and
heat-treating the intermediate article, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C,
the fabricating the intermediate article includes applying a laser beam to a layer of the powder along scan lines parallel to one another, and
in applying the laser beam, a value obtained by dividing a pitch between the scan lines by a laser spot diameter is in the range of 0.6 to 1.0.

2. The shaped article production method according to claim 1, wherein the heat-treating the intermediate article includes HIP treatment.

3. An intermediate article made of a Ni-based alloy, the intermediate article including columnar crystal grains of a dendritic crystal structure, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C,
a spacing between branches of a primary dendritic crystal of the dendritic crystal structure is less than 3 µm, and
a degree of orientation in {100} plane in a cut surface perpendicular to a longitudinal direction of the columnar crystal grains is 40% or more.

4. A shaped article made of a Ni-based alloy, the shaped article including columnar crystal grains of a non-dendritic crystal structure, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and
when shapes of the columnar crystal grains observed in a cut surface parallel to a longitudinal direction of the columnar crystal grains are approximated by ellipses each of which has an area equal to that of a corresponding one of the columnar crystal grains, an aspect ratio calculated as a ratio of an average of lengths of major axes of the ellipses to an average of lengths of minor axes of the ellipses is 4.0 or more.

5. A shaped article made of a Ni-based alloy, the shaped article including columnar crystal grains of a non-dendritic crystal structure, wherein
the Ni-based alloy contains, in percent by mass, 10 to 16% Cr, 4.5 to 7.5% Al, 2.8 to 6.2% Mo, 0.8 to 4% Nb + Ta, 0.01 to 2% Ti, 0.01 to 0.3% Zr, and 0.01 to 0.3% C, and
a degree of orientation in {100} plane in a cut surface perpendicular to a longitudinal direction of the columnar crystal grains is 40% or more.
